# EUROPEAN PATENT SPECIFICATION

(11) **EP 1 473 984 B1**
(45) Date of publication and mention of the grant of the patent: **05.11.2008**
(21) Application number: 03700117.9
(22) Date of filing: 16.01.2003
(51) Int. Cl.: A01G 9/10

(54) **SUBSTRATE**
SUBSTRAT
MILIEU VEGETAL

(30) Priority: 18.01.2002 FI 20025003
(43) Date of publication of application: 10.11.2004
(73) Proprietor: Kekkilä Oyj, 04300 Tuusula (FI)
(72) Inventor: TAHVONEN, Risto, 21500 Piikkiö (FI); HILLI, Matti, 40520 Jyväskylä (FI); NYRÖNEN, Timo, 40270 Palokka (FI); TAINIO, Liisa, 00740 Helsinki (FI); HUTTUNEN, Jukka, 26910 Unaja (FI); HERRANEN, Markku, 40700 Jyväskylä (FI); REINIKAINEN, Olli, 40200 Jyväskylä (FI)
(74) Representative: Helke, Kimmo Kalervo
(86) International application number: PCT/FI2003/000027
(87) International publication number: WO 2003/059042

(56) References cited:
- GB-A- 192 778
- GB-A- 626 557
- DATABASE WPI Week 200009, Derwent Publications Ltd., London, GB; Class C04, AN 2000-098455, XP002978885 & CN 1 232 007 A (WEN X) 20 October 1999

## Description

The present invention relates to a substrate intended for plants, particularly for horticultural plants, which comprises unsterilized horticultural peat and possible additional nutrients, and in which the proportion of horticultural peat is 50 - 98 %.

Light sphagnum peat and horticultural peat in general are the substrates most widely used in horticultural cultivation in Finland and other countries. The use of horticultural peat in greenhouses and nurseries in short and long-term cultivation is especially widespread. Horticultural peat's water-retention properties, its air volume, and its ability to retain nutrients, as well as its suitability for the growth and utilization of beneficial microbes are properties that are widely and generally known and exploited. In horticulture, it is particularly important that the substrate is not only well aerated, but that it also retains plenty of water available for the plants. A good substrate should also retain its structure and shape for up to several years, and it should also be possible to irrigate it with more water than the plants need, to flush out the excessive amounts of nutrient salts that often accumulate in the substrate. The need for flushing concerns especially sodium and chlorine, which occur excessively in irrigation water in many places.

The physical structure of horticultural peat and particularly sphagnum peat is such that when it is watered excessively the air pores fill with water, so that the roots of the plants suffer from a lack of oxygen. This phenomenon disturbs the growth of the plants. Horticultural peat is an organic substrate, which will be decomposed by microbial activity into mainly water and carbon dioxide. The substrate then shrinks, generally at an annual rate of 20 - 30 %. This phenomenon causes problems, particularly in long term cultivation, such as cut roses. The micro organisms (fungi and bacteria) contained in horticultural peat are beneficial and killing them by sterilization results in poorer growth than when using unsterilized (natural) horticultural peat.

Practical solutions to the problems described above have been sought by mixing various mineral substances, such as sand, clay, perlite, and vermiculite, as well as styrox chips, etc. in the peat, to improve its structure. None of these additives have found wider application, due to various problems. Particularly synthetic substrates, such as mineral wool and various plastic products are problem waste in terms of the recycling of substrates, as they are unsuitable for composting or for use as soil conditioners on fields. A substrate according to the preamble of claim 1 is known from GB-A-626 557.

The present invention is thus intended to create a substrate mainly of peat for plants, particularly for horticultural plants. This substrate has superior properties compared to peat, particularly in terms of its structural stability in long-term cultivation and when compressed, its air volume during exessive irrigation in order to wash out salts, as well as its resistance to the decomposing effect of microbes, while in addition to these properties, it is also environmentally friendly.

The principal characteristics of the invention are stated in the accompanying Claims, of which Claim 1 in its entirety defines the scope of protection of the invention, the other Claims defining preferred embodiments of the invention, without, however, restricting the scope of protection of the invention.

The named properties of the substrate according to the present invention, which contains mainly horticultural peat, have, in the aforementioned application, been improved by adding coke in a particulate form to the peat.

The coke is manufactured by the pyrolysis of organic matter, for example, coal, wood, or peat, at a high temperature in the order of about 1000°C, so that the gasified components released from it leave behind a porous, carbonaceous coke with a very large internal surface area, which is used in applications such as an alloying agent in the metallurgical industry. Pure coked coal is also used in activated carbon filters, and, for example, as medicinal carbon, where the very large internal surface area of the porous coke is exploited for absorptive purposes.

Coke has also been used as a substrate, but not as a component of substrates containing mainly horticultural peat, and thus it has not been realized that, by adding coke in a particulate form to a horticultural peat mixture, the tendency of horticultural peat to shrink under compression and in long-term cultivation can be reduced, while irrigation can be increased to flush out salts, without the air content of the horticultural peat mixture suffering. The invention exploits the proven natural phenomenon, that pieces of carbonized wood from forest fires and campfires remains unchanged for years. They have never been attacked by organic waste, such as wood-decomposing fungi. Such objects always retain a high air content, provided that the soil under them rapidly removes excess water.

The substrate according to the invention contains, besides horticultural peat and possible additional nutrients, at least about 2 %, preferably about 2 - 40 %, for example 20 - 40 %, coke in a particulate form, in proportion to the total volume of the substrate.

The particle size of the coke is preferably 5 - 10 mm, the coke being preferably made from coal, wood, or peat. The horticultural peat can, in turn, be sphagnum peat, preferably light sphagnum peat (decomposition 1 - 3 on the von Post scale).

The object of this invention is thus a substrate, containing mainly horticultural peat, for plants, particularly horticultural plants, which additionally contains coke sorted to a set size, which is mixed with the horticultural peat to a proportion of 2 - 40 volume percent of the total volume. The coke gives the peat a sturdy structure, which will remain intact even when compressed. The addition of the coke allows excess irrigation of the substrate, to remove excess salts, without the air content of the substrate suffering. The addition of the coke causes the roots of the plants to grow strongly and white, compared to growth in the basic peat. In addition, compared to other substrates containing peat, substrates containing much coke shrink only slightly during long-term cultivation.

In the following, the invention is examined in greater detail with the aid of examples, which, however, in no way restrict the scope of the protection of the invention.

### Manufacturing method

Coke manufactured from peat or wood, originally intended for metallurgical applications in the manufacture of iron from ore, was ground to create a particle size of mainly 5 - 10 mm. The sieved coke was mixed evenly with different volume percentages of light sphagnum peat, i.e. so-called horticultural peat. A number of micro-organisms live in horticultural peat in a natural state and form a totality that promotes growth. The degree of decomposition of the horticultural peat was about 2 on the von Post scale. The volume percentages used in the different experiments varied in the range 2 - 40 %. The mixture was implemented in such a way that, for example, 30 units of coke were mixed with 70 units of horticultural peat, but the final volume did not have to be exactly 100 units. The substrate was given basic fertilizer, in such a way that the amounts of fertilizer and lime were added directly to the peat, according to the volume of the horticultural peat, the plant to be grown, and the method of cultivation, prior to the mixing of the coke. In the growing season, the substrates were fertilized by irrigation, as in normal horticultural peat cultivation.

### Cultivation experiments

In the cultivation experiments, tomatoes, cucumbers, and roses were grown in a greenhouse, using normal professional cultivation. The test arrangement used followed the method of squares randomized by blocks, in which there were 3 - 6 blocks and 3 - 8 plants being tested per test square, depending on the test being carried out. The plants' yield was measured while the development of the plants above ground and of their roots was measured or visually estimated using a relativity scale, from which mathematical key ratios were calculated for the tables, to depict the characteristics of the plants. In addition, visual measurements and physical and chemical definitions of the substrates were made as required.

### Example 1

The cucumber and tomato seedlings grew better in the substrates to which 2 - 20 % coke had been added, than in the normal horticultural peat. When there was 40 - 100 % coke in the substrate, however, the seedlings were smaller than in horticultural peat. In all the substrates with coke mixed in, the roots were strong and white, compared to the plain peat, in which darkening and dead branch roots appeared. On the basis of the test results, the addition of coke strengthens the growth of the roots in peat, by giving a denser root growth or plants with thicker roots. The coke creates precisely aeration in the substrate during the growing period.

**Table 1.**

| The effect of peat coke and charcoal coke on the condition of the roots of outdoor cucumbers and on the fresh weights of the seedlings, when the coke is mixed with light sphagnum peat. Assessment scale for the roots: 1 = weak, 2 = normal, 3,25 = strong. Observations 3 seedlings/replication, 3 replications. Growing period 23 days. | | |
|---|---|---|
| Substrate | Fresh weight (g/plant) | Root condition |
| 1) light sphagnum peat 100 % | 17,83 | 1,78 |
| 2) peat coke 10 % + light sphagnum peat 90 % | 20,07 | 3,17 |
| 3) peat coke 20 % + light sphagnum peat 80 % | 17,90 | 3,11 |
| 4) peat coke 40 % + light sphagnum peat 60 % | 16,47 | 3,11 |
| 5) charcoal coke 10 % + light sph. peat 90 % | 19,66 | 2,5 |
| 6) charcoal coke 20 % + light sph. peat 80 % | 19,07 | 2,78 |
| 7) charcoal coke 40 % + light sph. peat 60 % | 17,31 | 2,83 |

**Table 2.**

| Outdoor tomato seedlings' fresh weights g/plant and root condition on a scale 1 (weak), 2 (normal), and 3 (strong), when different amounts of peat and charcoal coke are added to peat. Averages of 3 x 4 seedlings for root condition and 3 x 5 seedlings for fresh weight. Broadcast sowing, transplanting to pots. Growing period 43 days. | | |
|---|---|---|
| Substrate | Fresh weight (g/plant) | Root condition |
| 1. 100 % light sphagnum peat | 231,5 | 2,08 |
| 2. 2 % peat coke + 98 % light sphagnum peat | 237,6 | 2,33 |
| 3. 5 % peat coke + 95 % light sphagnum peat | 237,5 | 2,17 |
| 4. 10 % peat coke + 90 % light sphagnum peat | 230,7 | 2,25 |
| 5. 20 % peat coke + 80 % light sphagnum peat | 216,2 | 2,50 |
| 6. 40 % peat coke + 60 % light sphagnum peat | 187,8 | 2,42 |
| 7. 2 % charcoal coke + 98 % light sph. peat | 225,7 | 2,25 |
| 8. 5 % charcoal coke + 95 % light sph. peat | 234,0 | 2,75 |
| 9. 10 % charcoal coke + 90 % light sph. peat | 225,4 | 2,50 |
| 10. 20 % charcoal coke + 80 % light sph. peat | 221,5 | 2,33 |
| 11. 40 % charcoal coke + 60 % light sph. peat | 199,0 | 2,25 |

**Table 3.**

| Outdoor cucumber seedlings' fresh weights g/plant and root condition on a scale 1 (weak), 2 (normal), and 3,2 (strong), when different amounts of peat and charcoal coke are added to peat. Averages of 3 x 3 seedlings. Growing period 24 days. | | |
|---|---|---|
| Substrate | Fresh weight (g/plant) | Root condition |
| 1) 100 % light sphagnum peat | 36,3 | 2,11 |
| 2) peat coke (10 %) + light sphagnum peat | 34,2 | 2,92 |
| 3) peat coke (20 %) + light sphagnum peat | 29,9 | 2,89 |
| 4) peat coke (40 %) + light sphagnum peat | 26,9 | 2,78 |
| 5) charcoal coke (10 %) + light sph. peat | 33,4 | 2,44 |
| 6) charcoal coke (20 %) + light sph. peat | 31,1 | 2,58 |
| 7) charcoal coke (40 %) + light sph. peat | 26,7 | 2,58 |

### Example 2

The tomatoes and roses grew quite as well in the substrates with coke added as they did in the various peat grades (Table 5) or particularly in the substrate, rose board (Table 4) developed by Kekkilä Oy for rose cultivation. The substrates containing coke retained nearly their original growth volume up to the end of the growing period. In heavy irrigation, the irrigation water easily passed through particularly the substrates containing a big percentage of coke. The colour of the irrigation water running through was not different to that running through peat. The volume of the substrate containing the greatest addition of coke scarcely decreased at all when compressed. Large additions of coke increased the substrate's pH value to nearly a pH value of 7, for which reason these substrates had to be fertilized with acid fertilizers. Measuring moisture content of the substrates containing a big percentage of coke with a Grodan meter or a tensiometer was problematic. Substrates containing the highest coke contents (more than 20 %) require smaller, but more frequent irrigation doses than a traditional substrate and also permit the substrate to be flushed clean of excess fertilizer salts, if required, as the substrate retains its air content even when over irrigated.

**Table 4.**

| Accumulated yields of roses in a commercial peat mixture "Ruusulevy (Rose board)" and in sphagnum peat mixed with 40 % of peat coke. | | | | | | |
|---|---|---|---|---|---|---|
| | 1 yield | 2 yield | 3 yield | 4 yield | 5 yield | Total |
| | pieces /m2 | | | | | |
| Peat coke 40 % + sph. peat 60 % | 30,4 | 34,6 | 27,78 | 54,03 | 50,97 | 197,8 |
| Rose board | 27,6 | 33,9 | 33,25 | 53,16 | 49,44 | 197,3 |

**Table 5.**

| Total yield of tomatoes using various peat grades and in sphagnum peat, to which 10 % and 40 % of peat coke has been added. 4 repetitions in the experiment and 5 seedlings /repetition. | |
|---|---|
| Substrate | Yield (kg/m2) |
| 1 Cotton grass | 31,5 |
| 2 Sedge peat | 33,0 |
| 3 Sphagnum peat | 33,1 |
| 4 Peat coke 10 % + sphagnum peat 90 % | 33,2 |
| 5 Peat coke 40 % + sphagnum peat 60 % | 31,8 |

### Conclusions

The addition of coke, principally to a substrate containing horticultural peat, has shown itself to be a promising way to change the structure of such a substrate so that the substrate can, if necessary, be irrigated exessively, without causing suffocation of the plants' roots in anaerobic conditions. When a sufficient amount of coke is used, i.e. 20 - 40 %, a structure is created in the substrate, in which the uncollapsible coke particles support each other, so that the substrate will not shrink, even though the actual horticultural peat between the coke particles decomposes strongly. Use of the invention achieves the same valuable properties as in synthetic substrates, such as mineral wool, with the difference that after use the coke-peat mixture is suitable for recycling, for example as a natural soil conditioner. The addition of coke increases the number of roots in plants. The experiments clearly indicate that the roots do not darker or begin to decompose as rapidly as they do in pure horticultural peat. At present, the basic reason for this phenomenon can only be guessed at. Coke possibly acts like activated carbon, which absorbs compounds in the substrate that may be produced by, for instance, thermophilic microbes, which multiply during the detrimental heating that sometimes occurs in the stacking of peat.

## Claims

1. A substrate for plants, particularly for horticultural plants, which substrate comprises unsterilized horticultural peat and possible additional nutrients, and in addition it contains coke in a particulate form, to create air content during cultivation **characterized in that** the proportion of horticultural peat is 50 - 98 %, of the total volume of the substrate.

2. A substrate according to Claim 1, **characterized in that** it contains at least about 2 % and preferably about 2 - 40 %, for example 20 - 40 % of particulate coke, as a proportion of the total volume of the substrate.

3. A substrate according to Claim 1, **characterized in that** the particle size of the coke is 5 - 10 mm.

4. A substrate according to any of the above Claims, **characterized in that** the coke in particulate form is peat coke.

5. A substrate according to any of Claims 1 - 3, **characterized in that** the coke in particulate form is charcoal.

6. A substrate according to any of Claims 1 - 4, **characterized in that** the coke in particulate form is something other than peat coke or charcoal.

7. A substrate according to any of the above Claims, **characterized in that** the horticultural peat is sphagnum peat, preferably light sphagnum peat.

## Patentansprüche

1. Für Pflanzen, insbesondere für Gartenpflanzen bestimmtes Substrat, das aus unsterilisiertem Gartentorf und eventuellen Zusatznährstoffen besteht und außerdem zur Gewährleistung der Luftigkeit während des Anbaus stückigen Koks enthält, **dadurch gekennzeichnet, dass** der Anteil des Gartentorfs 50 - 98 % des Substrat-Gesamtvolumens beträgt.

2. Substrat nach Anspruch 1, **dadurch gekennzeichnet, dass** es, auf das Substrat-Gesamtvolumen bezogen, wenigstens etwa 2 %, bevorzugt etwa 2 - 40 % stückigen Koks enthält.

3. Substrat nach Anspruch 1, **dadurch gekennzeichnet, dass** die Korngröße des Kokses 5 - 10 mm beträgt.

4. Substrat nach irgendeinem der obigen Ansprüche, **dadurch gekennzeichnet, dass** der stückige Koks aus Torfkoks besteht.

5. Substrat nach irgendeinem der Ansprüche 1 bis 3, **dadurch gekennzeichnet, dass** der stückige Koks aus Holzkohle besteht.

6. Substrat nach irgendeinem der Ansprüche 1 bis 4, **dadurch gekennzeichnet, dass** der stückige Koks aus etwas anderem als Torfkoks oder Holzkohle besteht.

7. Substrat nach irgendeinem der obigen Ansprüche, **dadurch gekennzeichnet, dass** der Gartentorf aus Sphagnum-Torf, bevorzugt aus Sphagnum-Weißtorf besteht.

## Revendications

1. Substrat pour les plantes, spécialement pour les plantes horticoles, lequel substrat se compose de tourbe horticole non stérilisée et de substances nutritives éventuelles, et contient en plus du coke sous forme de particules pour assurer la teneur en air pendant la culture, **caractérisé en ce que** la proportion de tourbe horticole est de 50 à 98 % du volume total du substrat.

2. Substrat selon la revendication 1, **caractérisé en ce qu'**il contient au moins environ 2 % et de préférence environ 2 à 40 %, par exemple 20 à 40 %, de coke sous forme de particules en proportion du volume total du substrat.

3. Substrat selon la revendication 1, **caractérisé en ce que** la taille de la particule de coke est de 5 à 10 mm.

4. Substrat selon l'une quelconque des revendications précédentes, **caractérisé en ce que** le coke sous forme de particules est du coke de tourbe.

5. Substrat selon l'une quelconque des revendications 1 à 3, **caractérisé en ce que** le coke sous forme de particules est du charbon de bois.

6. Substrat selon l'une quelconque des revendications 1 à 4, **caractérisé en ce que** le coke sous forme de particules est quelque chose d'autre que du coke de tourbe ou du charbon de bois.

7. Substrat selon l'une quelconque des revendications précédentes, **caractérisé en ce que** la tourbe horticole est de la tourbe de sphaigne, de préférence de la tourbe de sphaigne blonde.
